# EUROPÄISCHE PATENTSCHRIFT

(11) **EP 2 615 950 B1**
(45) Veröffentlichungstag und Bekanntmachung des Hinweises auf die Patenterteilung: **17.09.2014**
(21) Anmeldenummer: 12748162.0
(22) Anmeldetag: 26.07.2012
(51) Int. Cl.: A47J 31/44, A47J 43/12

(54) **VORRICHTUNG ZUM SCHÄUMEN EINER FLÜSSIGKEIT**
DEVICE FOR FOAMING A LIQUID
DISPOSITIF SERVANT À FAIRE MOUSSER UN LIQUIDE

(30) Priorität: 29.07.2011 DE 102011108810
(43) Veröffentlichungstag der Anmeldung: 24.07.2013
(73) Patentinhaber: Barth, Volker, 63067 Offenbach am Main (DE)
(72) Erfinder: Barth, Volker, 63067 Offenbach am Main (DE)
(74) Vertreter: Dimmerling & Huwer
(86) Internationale Anmeldenummer: PCT/EP2012/003163
(87) Internationale Veröffentlichungsnummer: WO 2013/017225

(56) Entgegenhaltungen:
- EP-A1- 2 298 142
- DE-A1-102007 045 266
- DE-U1-202004 014 737
- DE-U1-202007 012 767
- US-A- 5 738 002

## Beschreibung

Die Erfindung betrifft eine Vorrichtung zum Schäumen einer Flüssigkeit, mit einer Luftanreichungseinrichtung, mittels der die Flüssigkeit mit Luft durchsetzbar ist, mit einer über eine Leitung mit der Luftanreichungseinrichtung verbundenen Auslasseinrichtung, und mit einer Pumpe zum Fördern der luftdurchsetzten Flüssigkeit von der Luftanreichungseinrichtung zur Auslasseinrichtung.

Eine derartige Vorrichtung ist beispielsweise aus der DE 10 2008 058 934 A1 bekannt. Bei der bekannten Vorrichtung ist in der Auslassdüse ein Sieb angeordnet, durch welches die bereits geschäumte Flüssigkeit durchtritt. Hierdurch werden die im Schaum enthaltenen großen Luftblasen zerstört und es bilden sich in Abhängigkeit der Maschenweite des Siebes kleine Luftblasen. Durch die kleinen Luftblasen entsteht ein stabiler Schaum.

Wenngleich mittels der bekannten Vorrichtung auch ein qualitativ hochwertiger Schaum herstellbar ist, so wurde er vom Erfinder dennoch als verbesserungswürdig angesehen.

Aufgabe der Erfindung ist es, eine Vorrichtung der eingangs genannten Art zu schaffen, die es ermöglicht, einen qualitativ hochwertigen, stabilen Schaum zu erzeugen.

Diese Aufgabe wird dadurch gelöst, dass in der Leitung mindestens ein Strömungswiderstand angeordnet ist, der eine Mehrzahl von aneinander angrenzenden, relativ zueinander bewegbaren Widerstandselementen aus einem elastischen Werkstoff hat, zwischen denen Durchlässe für die luftdurchsetzte Flüssigkeit gebildet sind, und dass der Strömungswiderstand derart gegen ein Widerlager positionierbar ist, dass die Widerstandselemente bei Druckbeaufschlagung mit der luftdurchsetzten Flüssigkeit verdichtet werden.

Der Erfindung liegt die Erkenntnis zu Grunde, dass mit zunehmendem Druck der dem Strömungswiderstand zugeführten, luftdurchsetzten Flüssigkeit die in dem Strömungswiderstand enthaltenen Widerstandselemente verdichtet werden und dass dabei der Querschnitt der zwischen den Widerstandselementen gebildeten Durchlässen abnimmt. Bei einer Abnahme des Druck der dem Strömungswiderstand zugeführten, luftdurchsetzten Flüssigkeit werden die Widerstandselemente beispielsweise aufgrund ihrer Elastizität und/oder aufgrund von Turbulenzen, die beim Durchtritt der luftdurchsetzten Flüssigkeit durch die Durchlässe in der Flüssigkeit auftreten, aufgelockert. Dabei nimmt der Querschnitt der zwischen den Widerstandselementen gebildeten Durchlässen zu. Beim Durchtritt der luftdurchsetzten Flüssigkeit durch den Strömungswiderstand wird daher ein sehr feinporiger und stabiler Schaum erzeugt. Dieser Schaum weist eine hohe Qualität auf. Die Elastizität des Strömungswiderstands ist bevorzugt derart auf den von der Pumpe erzeugten Förderdruck abgestimmt, dass die luftdurchsetzte Flüssigkeit beim Durchfluss durch den Strömungswiderstand eine Kraft von 1 Newton bis 400 Newton auf den Strömungswiderstand ausübt.

Bei einer bevorzugten Ausgestaltung der Erfindung ist der Strömungswiderstand in der Auslasseinrichtung angeordnet. Die Vorrichtung gibt dann einen besonders feinen und gleichmäßigen Schaum ab.

Als sehr vorteilhaft hat es sich erwiesen, wenn die Widerstandselemente Granulatkörner sind. Der Strömungswiderstand ist dann kostengünstig herstellbar. Die Granulatkörner weisen bevorzugt eine von einer Kugel abweichende Formgebung auf, beispielsweise eine im Wesentlichen ovale Form und/oder eine rechteckige Form. Die einzelnen Granulatkörner können eine unterschiedliche Geometrie und/oder unterschiedliche Abmessungen aufweisen. Die Länge der Granulatkörner liegt bevorzugt im Bereich von 0,5 bis 3,5 mm, insbesondere 0,5 bis 1,2 mm. Die Oberfläche der Granulatkörner weist bevorzugt Kanten, Stufen oder Absätze auf. Die Oberfläche der Granulatkörner kann aber auch stetig differenzierbar sein.

Die Granulatkörner bestehen bevorzugt aus Kunststoff, der eine Härte von 28-100 Shore aufweist.

Vorteilhaft ist, wenn die Pumpe eine Verdrängerpumpe ist, und wenn der Strömungswiderstand zwischen der Pumpe und der Auslasseinrichtung angeordnet ist, insbesondere zwischen der Pumpe und einem in die Leitung geschalteten Heizgerät zum Erhitzen der luftdurchsetzten Flüssigkeit. Dabei werden durch den Strömungswiderstand Druckspitzen in der luftdurchsetzten Flüssigkeit geglättet, die beispielsweise auftreten können, wenn die Verdrängerpumpe die luftdurchsetzte Flüssigkeit ungleichmäßig fördert. Dabei wird durch den Strömungswiderstand auch eine gleichmäßigere Schaumabgabe an der Auslasseinrichtung ermöglich, wobei insbesondere Spritzer vermieden werden. Die Verdrängerpumpe kann insbesondere eine Schlauchpumpe, eine Wellenpumpe oder eine Membranpumpe sein. Die erfindungsgemäße Vorrichtung kann aber auch eine beliebige andere Pumpe aufweisen, insbesondere eine Zahnradpumpe oder eine Drehschieberpumpe.

Bei Bedarf kann zwischen der Pumpe und dem Strömungswiderstand ein Rückschlagventil in der Leitung angeordnet sein, das für eine von der Luftanreichungseinrichtung zur Auslasseinrichtung fließende Strömung durchlässig ist. Auch durch diese Maßnahme kann eine gleichmäßige Schaumabgabe an der Auslasseinrichtung erreicht werden.

Bei einer bevorzugten Ausgestaltung der Erfindung ist das Heizgerät als Niederdruckboiler ausgestaltet, wobei zwischen dem Heizgerät und der Auslasseinrichtung ein steuerbares Auslassventil angeordnet ist, und wobei das Auslassventil derart mit einer Steuereinrichtung in Steuerverbindung steht, das die luftangereicherte Flüssigkeit in dem Heizgerät einen Druck von 0,5 bar bis 4 bar aufweist, insbesondere einen Druck von 1 bar bis 3 bar. Der Druck liegt bevorzugt auch bei abgeschalteter Pumpe an. Das kann dadurch erreicht werden, dass vor dem Abschalten der Pumpe zunächst mit Hilfe der Steuereinrichtung das Auslassventil geschlossen wird, so dass die luftangereicherte Flüssigkeit dann in dem zwischen dem Rückschlagventil und dem Auslassventil befindlichen Leitungsvolumen eingeschlossen ist. Dadurch wird vermieden, dass bei einer Verwendung der Vorrichtung als Milchschämvorrichtung die luftangereicherte Milch eine Haut und/oder Milchstein bildet, welche(r) den Strömungswiderstand verstopfen kann.

Bei einer vorteilhaften Ausführungsform der Erfindung sind die Widerstandselemente fadenartig ausgestaltet und zu einer elastisch verformbaren Wolle miteinander verbunden. Dabei bestehen die fadenartigen Widerstandselemente bevorzugt aus einem elastischen, temperaturfesten Material, insbesondere aus Metall. Die einzelnen Fäden der Wolle haben unterschiedliche Querschnittsabmessungen. Außerdem können sich die Querschnittsabmessungen der einzelnen Fäden - ausgehend von dem einen zum anderen Ende des Fadens hin - verändern.

Bei einer bevorzugten Ausgestaltung der Erfindung bestehen die Widerstandselemente aus einem natürlichen Werkstoff, insbesondere aus Kokos und/oder Haaren. Die Widerstandselemente können dann nach Gebrauch auf einfache Weise umweltschonend entsorgt werden.

Bei einer anderen vorteilhaften Ausführungsform sind die Widerstandselemente durch Späne oder Abschnitte von Spänen gebildet, die in Längserstreckungsrichtung einen im Wesentlichen konstanten Querschnitt aufweisen. Die Späne haben bevorzugt eine von einer Kreisform abweichende Querschnittsgeometrie, insbesondere eine eckige Querschnittsform. Die Breite der Späne kann zwischen 0,1 mm und 7 mm, insbesondere zwischen 0,2 mm und 3 mm und bevorzugt zwischen 0,3 mm und 1 mm betragen. Die Dicke der Späne kann zwischen 0,1 mm und 1 mm und bevorzugt zwischen 0,2 mm und 0,6 mm betragen. Versuche haben ergeben, dass mit derartigen Spänen ein besonders feinporiger, stabiler Schaum erzeugt werden kann. Die Späne können beispielsweise mit Hilfe einer Drehbank mit genau definierten Querschnittsabmessungen hergestellt werden. Dadurch wird eine gleichbleibend hohe Qualität des Schaums gewährleistet.

Vorteilhaft ist, wenn die Widerstandselemente aus Kunststoff bestehen, insbesondere aus Teflon, Polyoxymethylen (POM) oder Polyamid (PA). Dadurch kann auch bei hohen Temperaturen die erforderliche Elastizität der Widerstandselemente erreicht werden. Außerdem ist die Lebensmittelechtheit der Widerstandselemente gewährleistet.

Bei einer bevorzugten Ausgestaltung der Erfindung sind die Widerstandselemente zwischen in der Leitung hintereinander angeordneten Lochscheiben oder Sieben eingeschlossen sind, die mit ihren Erstreckungsebenen quer zur Längserstreckung der Leitung ausgerichtet und aus einer Ruhelage unter Komprimierung der Widerstandselemente aufeinander zu bewegbar sind, wobei die weiter von der Luftanreichungseinrichtung entfernte Lochscheibe oder das weiter von der Luftanreichungseinrichtung entfernte Sieb als Widerlager ausgebildet ist, gegen das die Widerstandselemente bei Druckbeaufschlagung mit der luftdurchsetzten Flüssigkeit positionierbar sind. Durch die Lochscheiben oder Siebe werden die Widerstandselemente einerseits daran gehindert, aus dem zwischen den beiden Lochscheiben oder Sieben eingeschlossenen Volumen herauszugelangen. Die Querschnittsabmessungen der Lochungen der Lochscheiben oder Siebe sind dazu so an die Abmessungen der Widerstandselemente angepasst, dass diese nicht durch die Lochungen hindurch treten können. Andererseits kann aber auch der Druck der luftangereicherten Flüssigkeit beim Durchströmen des Strömungswiderstands mit der Flüssigkeit über die Lochscheiben oder Siebe besser auf die Widerstandselemente übertragen werden, so dass der Strömungswiderstand stärker komprimiert wird.

Als sehr vorteilhaft hat sich erwiesen, wenn der Durchlassquerschnitt der einlassseitigen Lochscheibe oder des einlassseitigen Siebs kleiner ist als der Durchlassquerschnitt der auslassseitigen Lochscheibe oder des auslassseitigen Siebs. Dadurch werden die Widerstandselemente noch stärker durch den Druck der luftangereicherten Flüssigkeit komprimiert bzw. verdichtet.

Bei einer Weiterbildung der Erfindung sind die Widerstandselemente und gegebenenfalls die Lochscheiben oder Siebe in der Innenhöhlung einer lösbar mit der Leitung und/oder der Auslasseinrichtung verbindbaren Kartusche angeordnet. Die Widerstandselemente und gegebenenfalls die Lochscheiben oder Siebe können dadurch bei Bedarf auf einfach Weise zusammen mit der Kartusche ausgewechselt und durch ein entsprechendes Ersatzteil ersetzt werden. Der Strömungswiderstand kann dadurch auf einfache weise hygienisch sauber gehalten werden. Die Kartusche weist bevorzugt einen Außerdurchmesser von etwa 5-50 mm und eine Axiallänge 4-60 mm auf.

Nachfolgend sind Ausführungsbeispiele der Erfindung anhand der Zeichnung näher erläutert. Es zeigt:
- Fig. 1: eine schematische Blockdarstellung der erfindungsgemäßen Vorrichtung,
- Fig. 2: einen Längsschnitt durch ein Luftanreicherungsbauteil einer Luftanreicherungseinrichtung,

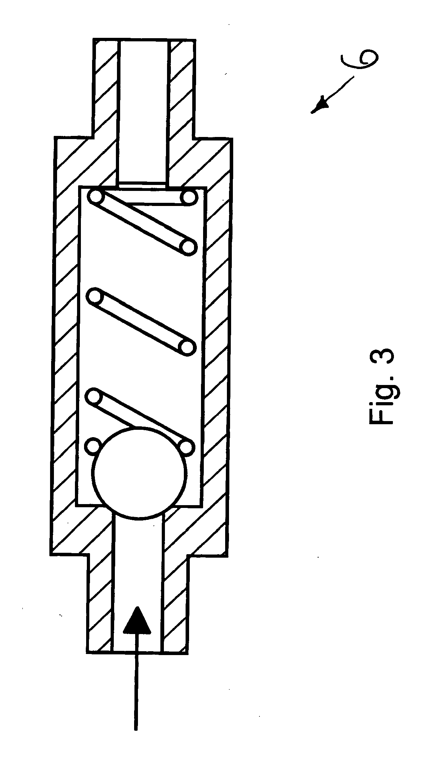

- Fig. 3: einen Längsschnitt durch ein Rückschlagventil,
- Fig. 4: einen Längsschnitt durch ein erstes Ausführungsbeispiel eines in eine Kartusche integrierten Strömungswiderstands,
- Fig. 5: eine Aufsicht auf die Auslassseite des Strömungswiderstands,
- Fig. 6: eine Aufsicht auf die Einlassseite des Strömungswiderstands,
- Fig. 7: einen Längsschnitt durch den in Fig. 4 gezeigten Strömungswiderstand, wobei der Strömungswiderstand in eine Rohrleitung eingebaut ist,
- Fig. 8: einen Längsschnitt durch ein zweites Ausführungsbeispiel des Strömungswiderstands und
- Fig. 9: einen Längsschnitt durch ein drittes Ausführungsbeispiel des Strömungswiderstands.

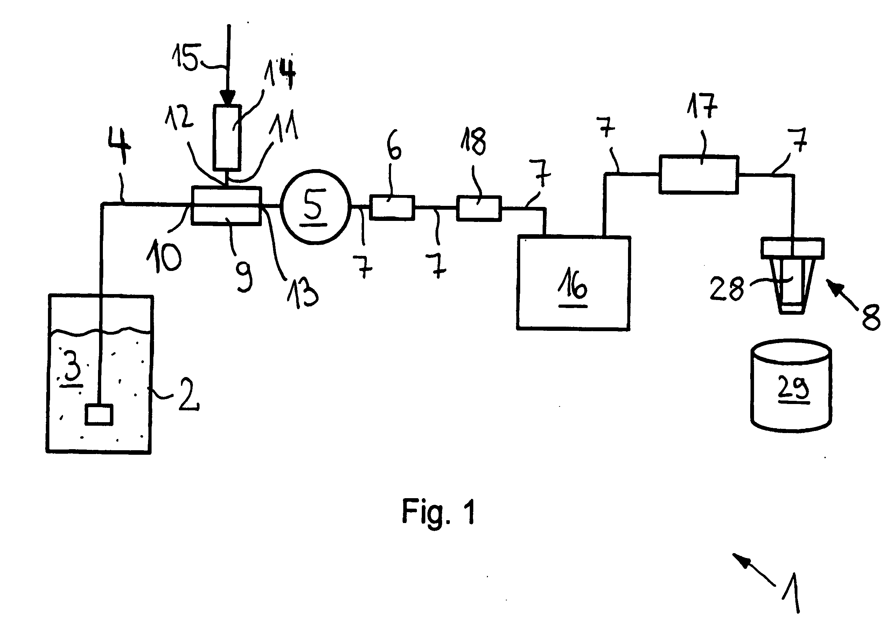

Eine in Fig. 1 im Ganzen mit 1 bezeichnete Vorrichtung zum Schäumen einer Flüssigkeit weist einen Vorratsbehälter 2 für Milch 3 auf. Die Milch 3 kann mittels einer in der Zeichnung nicht näher dargestellten Kühlvorrichtung im Vorratsbehälter 2 auf etwa 6 Grad Celsius gekühlt werden, um Bakterienbildung zu vermeiden.

Der Vorratsbehälter 2 ist über eine Ansaugleitung 4 mit einer Ansaugöffnung einer Verdränger-Pumpe 5 verbunden, die bevorzugt als Schlauchpumpe ausgestaltet ist. An ihrem von der Pumpe 5 entfernten, in Gebrauchsstellung in die Milch 3 eintauchenden Ende weist die Ansaugleitung 4 ein Rückschlagventil auf, das in Förderrichtung der Pumpe 5 durchlässig ist und entgegen der Förderrichtung sperrt.

Die Pumpe 5 ist an ihrer Druckseite über eine weitere Leitung 7 mit einer Auslasseinrichtung 8 verbunden. Daher kann mittels der Pumpe 5 Milch 3 aus dem Vorratsbehälter 2 der Auslasseinrichtung 8 zugeführt werden.

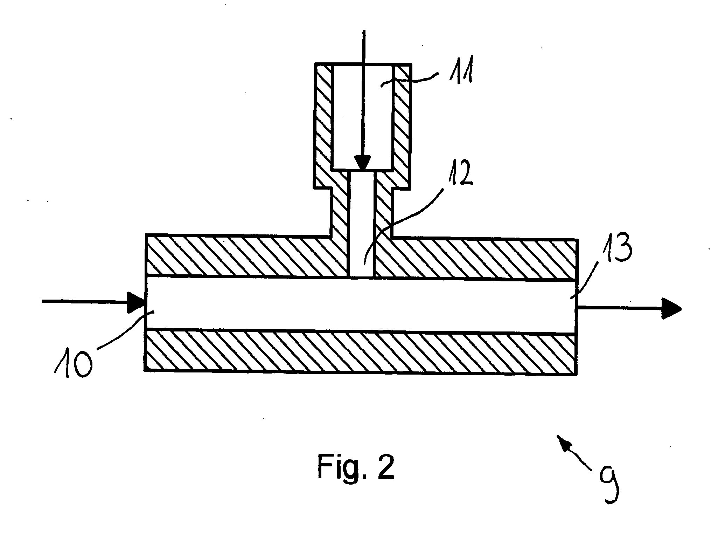

In der Ansaugleitung 4 ist eine in Fig. 2 näher dargestelltes ein Luftanreicherungsbauteil 9 angeordnet, die eine mit der Ansaugleitung 4 verbundene erste Einlassöffnung 10 für die Milch 3, eine mit einer Luftzuführleitung 11 verbundene zweite Einlassöffnung 12 für Luft und eine mit der Leitung 7 verbundene Auslassöffnung 13 aufweist. Über die zweite Einlassöffnung 12 wird der Milch 3 quer zu ihrer Förderrichtung Luft zugeführt, welche die Milch 3 durchsetzt.

In der Luftzuführleitung 11 ist ein einstellbares Luftregelventil 14 angeordnet. Der dem ein Luftanreicherungsbauteil 9 abgewandte Anschluss des Luftregelventils 14 ist mit einer Zuleitung 15 verbunden, deren Einlassöffnung derart angeordnet ist, dass keine verschmutzte Luft angesaugt wird. In der Zuleitung 15 kann auch ein Aktivkohlefilter angeordnet sein.

In der Leitung 7 ist ein Heizgerät 16 zum Erhitzen der luftdurchsetzten Flüssigkeit angeordnet. Das Heizgerät 16 ist als Niederdruckboiler mit einem Flüssigkeitsvorrat von 0,4 Litern ausgestaltet. Der Arbeitsdruck in dem Niederdruckboiler beträgt bevorzugt zwischen 2,4 bar und 4 bar. In dem Heizgerät 16 ist eine in der Zeichnung nicht näher dargestellte Rohrschlange angeordnet, durch welche die mit Luft durchsetzte Milch 3 geleitet wird. Im Inneren des Heizgeräts 16 ist ein auf eine vorbestimmte Temperatur erhitzter Wärmeträger angeordnet, der seine Wärme über die Rohrschlange an die durch die Rohrschlange geleitete Milch 3 abgibt. In der Leitung 7 ist des Weiteren ein elektromagnetisches Auslassventil 17 angeordnet, mittels dem der Milchfluss unterbrochen werden kann.

Zwischen der Pumpe 5 und dem Heizgerät 16 ist in der Leitung 7 ein erster Strömungswiderstand 18 angeordnet, der von der luftangereicherten Milch durchströmt wird. Der erste Strömungswiderstand 18 ist mittels einer in der Zeichnung nicht näher dargestellten Verschraubung lösbar mit der Leitung 7 verbindbar.

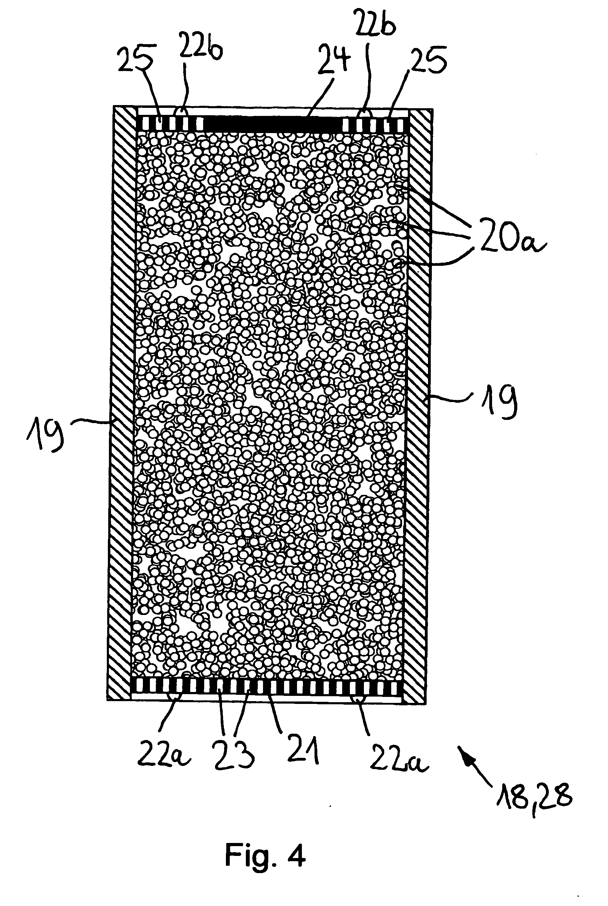

Wie in Fig. 4 erkennbar ist, weist der erste Strömungswiderstand 18 eine etwa zylindrische Kartusche 19 auf, deren Querschnittsabmessungen etwa den Innenquerschnittsabmessungen eines Leitungsabschnitts der Leitung 7 entsprechen, in welcher der erste Strömungswiderstand 18 angeordnet ist. Die Kartusche 19 hat eine in Umfangsrichtung umlaufende, etwa rohrförmige Umfangswand, welche eine Innenhöhlung umgrenzt, in der als Widerstandselemente 20a eine Vielzahl von elastischen Granulatkörnern aus Kunststoff angeordnet sind, die ein Schüttgut bilden, bei dem zueinander benachbarte Granulatkörner lose aneinander anliegen.

Die Kartusche 19 ist derart mit dem Schüttgut befüllt, dass die Granulatkörner in der Innenhöhlung der Kartusche 19 relativ zueinander bewegbar sind. Zwischen denen Granulatkörnern sind Durchlässe gebildet, durch welche die luftangereicherte Milch hindurch strömen kann.

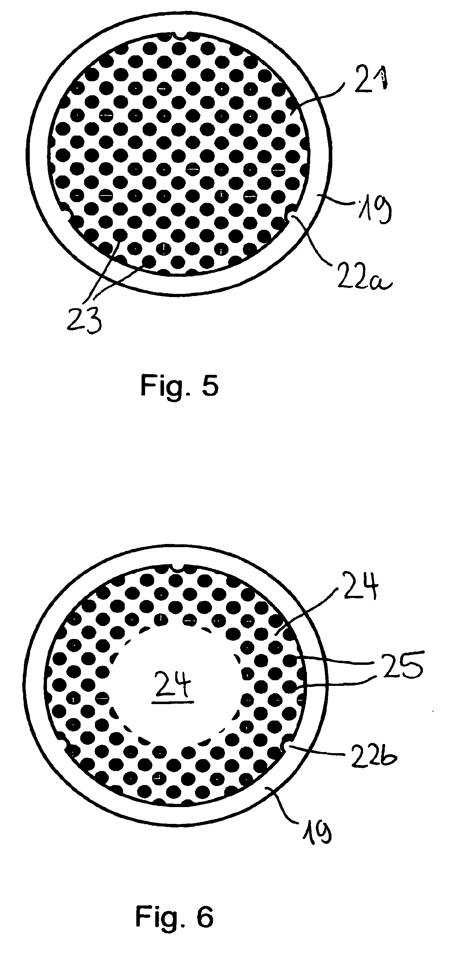

Die Kartusche 19 hat eine durch eine erste Lochscheibe 21 gebildete erste Stirnwand. Diese erstreckt sich in einer Ebene, die normal zur Längsmittelachse der Umfangswand der Kartusche 19 verläuft. Der Rand der ersten Lochscheibe 21 grenzt an die Innenfläche der Umfangswand der Kartusche 19 an. Wie in Fig. 4 und 5 erkennbar ist, weist die Umfangswand der Kartusche 19 an ihrer Innenseite mehrere in Umfangsrichtung zueinander versetzte erste Vorsprünge 22a auf, auf denen die erste Lochscheibe 21 aufliegt.

In Fig. 5 ist außerdem erkennbar, dass die erste Lochscheibe 21 eine Vielzahl von ersten Durchtrittslochungen 23 für Milchschaum aufweist. Die lichte Weite der ersten Durchtrittslochungen 23 ist kleiner als die entsprechende Abmessung der Widerstandselemente 20a, so dass diese nicht durch die ersten Durchtrittslochungen 23 hindurchpassen. In Fig. 4 ist erkennbar, dass die Widerstandselemente 20a auf der ersten Lochscheibe 21 aufliegen.

An ihrem von der ersten Lochscheibe 21 entfernten zuflussseitigen Ende weist die Kartusche 19 eine durch eine zweite Lochscheibe 24 gebildete zweite Stirnwand auf, die parallel zu der ersten Stirnwand verläuft und in axialer Richtung durch das Schüttgut von dieser beabstandet ist. Der Rand der zweiten Lochscheibe 24 grenzt an die Innenfläche der Umfangswand der Kartusche 19 an. Wie in Fig. 4 und 6 erkennbar ist, weist die Umfangswand der Kartusche 19 an ihrer Innenseite mehrere in Umfangsrichtung zueinander versetzte zweite Vorsprünge 22b auf, welche die zweite Lochscheibe 24 übergreifen.

In Fig. 6 ist erkennbar, dass die zweite Lochscheibe 24 eine Vielzahl von zweiten Durchtrittslochungen 25 für die luftangereicherte Milch 3 aufweist. Die lichte Weite der zweiten Durchtrittslochungen 25 ist kleiner als die entsprechende Abmessung der Widerstandselemente 20a, so dass diese nicht durch die zweiten Durchtrittslochungen 25 hindurchpassen sondern zwischen den Lochscheiben 21, 24 eingeschlossen sind. In Fig. 4 ist erkennbar, dass die zweite Lochscheibe auf dem Schüttgut aufliegen. Die zweiten Durchtrittslochungen 25 sind in einem ringförmigen Bereich der zweiten Lochscheibe 24 angeordnet, der einen mittleren, kreisscheibenförmigen Bereich der zweiten Lochscheibe 24 umgrenzt, in dem diese keine Durchtrittslochungen aufweist. Die zweite Lochscheibe 24 ist also als Prallscheibe ausgebildet. Dadurch wird ein größerer Anteil des mittels der Pumpe erzeugten Drucks auf die zweite Lochscheibe 24 übertragen als bei der ersten Lochscheibe 21.

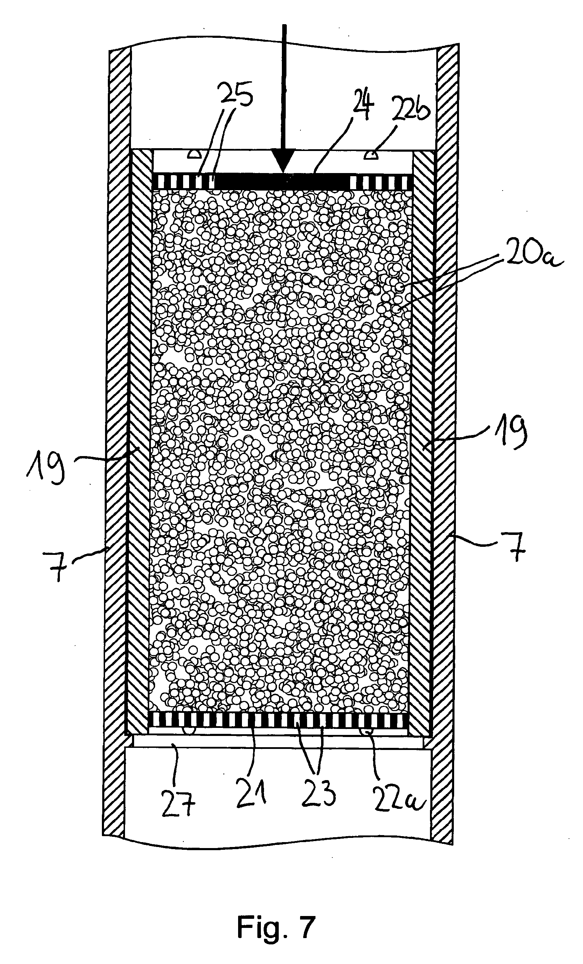

In Fig. 7 ist erkennbar, dass die Kartusche 19 auslassseitig an einer an der Innenwand der Leitung 7 vorgesehenen ersten Widerlagerstelle 27 aufliegt. Durch einen Vergleich von Fig. 4 mit Fig. 7 wird deutlich, dass die zweite Lochscheibe 25 axial in der Kartusche 19 bewegbar ist und sich beim Durchströmen des ersten Strömungswiderstands 18 in Richtung auf die erste Lochscheibe 21 relativ zu der Kartusche 19 verschiebt. Dabei drücken die Lochscheiben 21 mit einer Kraft von etwa 50 Newton bis 200 Newton gegen den ersten Strömungswiderstand 18, sodass das in der Kartusche 19 enthaltene Schüttgut beim Durchströmen des ersten Strömungswiderstand 18 mit der luftangereicherten Milch 3 komprimiert wird. Durch den ersten Strömungswiderstand 18 werden Druckschwankungen in der luftangereicherten Milch, welche durch die Pumpe 5 verursacht sind, abgeschwächt.

In der Auslasseinrichtung 8 ist ein zweiter Strömungswiderstand 28 angeordnet, mittels dem aus der luftangereicherten Milch 3 ein sehr feiner, stabiler Milchschaum erzeugt und in eine unterhalb der Auslasseinrichtung 8 befindliche Tasse 29 abgegeben wird. Die Auslasseinrichtung 8 ist zweigeteilt, wobei ein Teil an der Trennstelle eine Ausnehmung aufweist, in welcher der zweite Strömungswiderstand 28 angeordnet ist. Hierdurch lässt sich der zweite Strömungswiderstand 28 auf einfache Weise aus der Auslasseinrichtung 8 entfernen beziehungsweise in der Auslasseinrichtung 8 anordnen.

Die Auslasseinrichtung 8 weist eine in der Zeichnung nicht dargestellte zweite Widerlagerstelle auf, auf welcher der zweite Strömungswiderstand 28 aufliegt. Durch die zweite Widerlagerstelle ist der zweite Strömungswiderstand 28 in Durchflussrichtung gegen Verschieben in der Auslasseinrichtung 8 gesichert.

Bei einem ersten Ausführungsbeispiel ist der zweite Strömungswiderstand 28 baugleich mit dem ersten Strömungswiderstand 18.

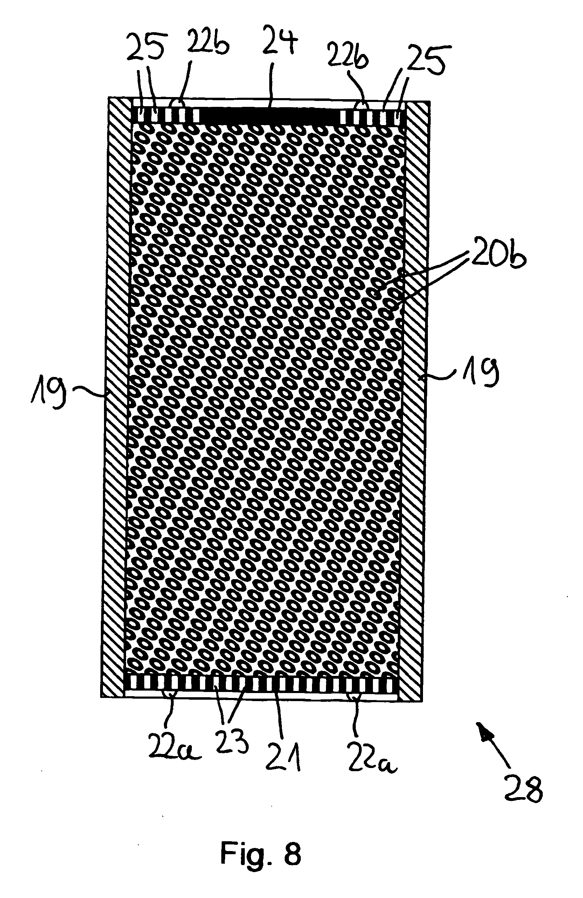

Bei einem zweiten Ausführungsbeispiel weist der zweite Strömungswiderstand 28 anstelle des Schüttguts einen elastisch verformbaren Span aus Kunststoff auf (Fig. 8). Die Widerstandselemente 20b sind dabei durch hintereinander angeordnete Abschnitte des Spans gebildet, die relativ zueinander bewegbar sind. Alternativ können die Widerstandselemente 20b auch als separate Späne 20b ausgebildet sein. Der Span hat einen etwa rechteckigen Querschnitt, wobei die Breite 3,5 mm und die Dicke des Spans 0,5 mm beträgt.

Die Widerstandselemente 20b sind in einer Kartusche 19 zwischen Lochscheiben 21, 25 angeordnet. Die Kartusche 19 des zweiten Ausführungsbeispiels entspricht der Kartusche des ersten Ausführungsbeispiels. Auch die Lochscheiben 21, 25 des zweiten Ausführungsbeispiels sind mit denen des ersten Ausführungsbeispiels baugleich. Die dortige Beschreibung gilt also für das zweite Ausführungsbeispiel entsprechend.

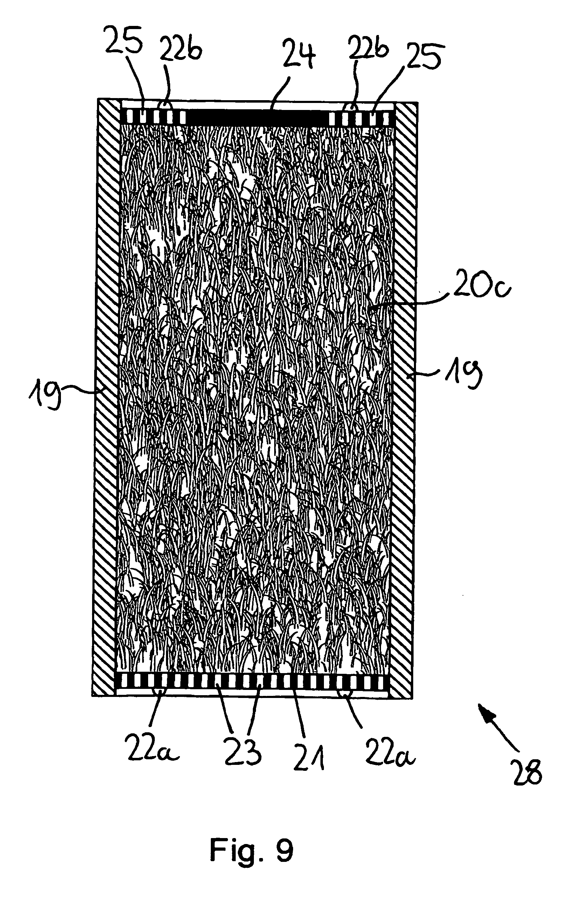

Bei einem dritten Ausführungsbeispiel der Erfindung weist der zweite Strömungswiderstand 28 fadenartige Widerstandselemente 20c auf, die eine Wolle bilden (Fig. 9). Dabei bestehen die Widerstandselemente 20c aus Kokos-Fäden. Die Widerstandselemente 20c sind in einer Kartusche 19 zwischen Lochscheiben 21, 25 angeordnet. Die Kartusche 19 des dritten Ausführungsbeispiels entspricht der Kartusche des ersten Ausführungsbeispiels. Auch die Lochscheiben 21, 25 des dritten Ausführungsbeispiels sind mit denen des ersten Ausführungsbeispiels baugleich. Die dortige Beschreibung gilt also für das dritte Ausführungsbeispiel entsprechend.

Zur Steuerung der Vorrichtung ist eine in der Zeichnung nicht näher dargestellt Steuereinrichtung vorgesehen, die einen Taster aufweist. Durch Betätigen des Tasters wird der Steuereinrichtung mitgeteilt, dass eine Portion Milchschaum hergestellt werden soll. Die Steuereinrichtung bewirkt aufgrund dessen, dass die Pumpe 5 betätigt sowie das Auslassventil 17 geöffnet wird. Die Pumpe 5 pumpt somit Milch 3 aus dem Vorratsbehälter 2 durch das Heizgerät 16, wodurch die Milch 3 erwärmt wird, zur Auslasseinrichtung. Dadurch, dass die Milch durch das Luftanreicherungsbauteil 9 fließt, gelangt über die Luftzuführleitung 11 Luft in die Milch und durchsetzt diese.

Die mit Luft durchsetzte Milch wird in dem Heizgerät 16 erhitzt, wodurch sie weiter aufschäumt. Die weiter aufgeschäumte Milch wird zunächst den ersten Strömungswiderstand 18 geleitet, um durch die Pumpe hervorgerufene Druckschwankungen auszugleichen, und gelangt dann über das Auslassventil 17 zum zweiten Strömungswiderstand 28. Beim Hindurchpressen der luftangereicherten Milch durch den zweiten Strömungswiderstand 28 werden die Widerstandselemente 20a, 20b, 20c komprimiert, wobei ein feiner und stabiler Milchschaum entsteht.

Erwähnt werden soll noch, dass der erste Strömungswiderstand 18 bei Bedarf entfallen kann, insbesondere wenn die Pumpe 5 einen gleichmäßigen Förderdruck aufweist.

## Patentansprüche

1. Vorrichtung (1) zum Schäumen einer Flüssigkeit, mit einer Luftanreichungseinrichtung, mittels der die Flüssigkeit mit Luft durchsetzbar ist, mit einer über eine Leitung (7) mit der Luftanreichungseinrichtung verbundenen Auslasseinrichtung (8), und mit einer Pumpe (5) zum Fördern der luftdurchsetzten Flüssigkeit von der Luftanreichungseinrichtung zur Auslasseinrichtung (8), **dadurch gekennzeichnet, dass** in der Leitung (7) mindestens ein Strömungswiderstand (18, 28) angeordnet ist, der eine Mehrzahl von aneinander angrenzenden, relativ zueinander bewegbaren Widerstandselementen (20a, 20b, 20c) aus einem elastischen Werkstoff hat, zwischen denen Durchlässe für die luftdurchsetzte Flüssigkeit gebildet sind, und dass der Strömungswiderstand (18, 28) derart gegen ein Widerlager positionierbar ist, dass die Widerstandselemente (20a, 20b, 20c) bei Druckbeaufschlagung mit der luftdurchsetzten Flüssigkeit verdichtet werden.

2. Vorrichtung (1) nach Anspruch 1, **dadurch gekennzeichnet, dass** der Strömungswiderstand (28) in der Auslasseinrichtung (8) angeordnet ist.

3. Vorrichtung (1) nach Anspruch 1 oder 2, **dadurch gekennzeichnet, dass** die Widerstandselemente (20a) Granulatkörner sind.

4. Vorrichtung (1) nach einem der Ansprüche 1 bis 3, **dadurch gekennzeichnet, dass** die Pumpe (5) eine Verdrängerpumpe ist, und dass der Strömungswiderstand (18) zwischen der Pumpe (5) und der Auslasseinrichtung (8) angeordnet ist, insbesondere zwischen der Pumpe (5) und einem in die Leitung geschalteten Heizgerät (16) zum Erhitzen der luftdurchsetzten Flüssigkeit.

5. Vorrichtung (1) nach einem der Ansprüche 1 bis 4, **dadurch gekennzeichnet, dass** zwischen der Pumpe (5) und dem Strömungswiderstand (18, 28) ein Rückschlagventil (6) in der Leitung (7) angeordnet ist, das für eine von der Luftanreichungseinrichtung zur Auslasseinrichtung fließende Strömung durchlässig ist.

6. Vorrichtung (1) nach Anspruch 5, **dadurch gekennzeichnet, dass** das Heizgerät (16) als Niederdruckboiler ausgestaltet ist, dass zwischen dem Heizgerät (16) und der Auslasseinrichtung (8) ein steuerbares Auslassventil (17) angeordnet ist, und dass das Auslassventil (17) derart mit einer Steuereinrichtung in Steuerverbindung steht, dass die luftangereicherte Flüssigkeit in dem Heizgerät (16) einen Druck von 0,5 bar bis 4 bar aufweist, insbesondere einen Druck von 1 bar bis 3 bar.

7. Vorrichtung (1) nach einem der Ansprüche 1 bis 6, **dadurch gekennzeichnet, dass** die Widerstandselemente (20c) fadenartig ausgestaltet und zu einer elastisch verformbaren Wolle miteinander verbunden sind.

8. Vorrichtung (1) nach einem der Ansprüche 1 bis 7, **dadurch gekennzeichnet, dass** die Widerstandselemente (20a, 20b, 20c) aus einem natürlichen Werkstoff bestehen, insbesondere aus Kokos und/oder Haaren.

9. Vorrichtung (1) nach einem der Ansprüche 1 bis 8, **dadurch gekennzeichnet, dass** die Widerstandselemente (20b) durch Späne oder Abschnitte von Spänen gebildet sind, die in Längserstreckungsrichtung einen im Wesentlichen konstanten Querschnitt aufweisen.

10. Vorrichtung (1) nach einem der Ansprüche 1 bis 7, 9, **dadurch gekennzeichnet, dass** die Widerstandselemente (20a, 20b, 20c) aus Kunststoff bestehen, insbesondere aus Teflon, Polyoxymethylen oder Polyamid.

11. Vorrichtung (1) nach einem der Ansprüche 1 bis 10, **dadurch gekennzeichnet, dass** die Widerstandselemente (20a, 20b,20c) zwischen in der Leitung hintereinander angeordneten Lochscheiben (21, 24) oder Sieben eingeschlossen sind, die mit ihren Erstreckungsebenen quer zur Längserstreckung der Leitung (7) ausgerichtet und aus einer Ruhelage unter Komprimierung der Widerstandselemente (20a, 20b,20c) aufeinander zu bewegbar sind, und dass die weiter von der Luftanreichungseinrichtung entfernte Lochscheibe (24) oder das weiter von der Luftanreichungseinrichtung entfernte Sieb als Widerlager ausgebildet ist, gegen das die Widerstandselemente (20a, 20b, 20c) bei Druckbeaufschlagung mit der luftdurchsetzten Flüssigkeit positionierbar ist.

12. Vorrichtung (1) nach einem der Ansprüche 1 bis 11, **dadurch gekennzeichnet, dass** der Durchlassquerschnitt der einlassseitigen Lochscheibe (24) oder des einlassseitigen Siebs kleiner ist als der Durchlassquerschnitt der auslassseitigen Lochscheibe (21) oder des auslassseitigen Siebs.

13. Vorrichtung (1) nach einem der Ansprüche 1 bis 12, **dadurch gekennzeichnet, dass** die Widerstandselemente (20a, 20b,20c) und gegebenenfalls die Lochscheiben (21, 24) oder Siebe in der Innenhöhlung einer lösbar mit der Leitung und/oder der Auslasseinrichtung verbindbaren Kartusche (19) angeordnet sind.

## Claims

1. Device (1) for foaming a liquid, having an air-enrichment unit by means of which the liquid is aeratable, having an outlet unit (8) which is connected via a line (7) with the air-enrichment unit, and having a pump (5) for conveying the aerated liquid from the air-enrichment unit to the outlet unit (8), **characterized in that** at least one flow resistance (18, 28), which has a plurality of mutually adjacent resistance elements (20a, 20b, 20c) which are displaceable relative to one another and which are of an elastic material and between which openings for the aerated liquid are formed, is disposed in the line (7), and **in that** the flow resistance (18, 28) is positioned in such a manner against a counter bearing that the resistance elements (20a, 20b, 20c), when impinged with pressure by the aerated liquid, are compacted.

2. Device (1) according to Claim 1, **characterized in that** the flow resistance (28) is disposed in the outlet unit (8).

3. Device (1) according to Claim 1 or 2, **characterized in that** the resistance elements (20a) are granules.

4. Device (1) according to one of Claims 1 to 3, **characterized in that** the pump (5) is a displacement pump and **in that** the flow resistance (18) is disposed between the pump (5) and the outlet unit (8), in particular between the pump (5) and a heating apparatus (16) for heating the aerated liquid, which is positioned in the line.

5. Device (1) according to one of Claims 1 to 4, **characterized in that** a check valve (6), which is permeable to a flow running from the air-enrichment unit to the outlet unit, is disposed in the line (7) between the pump (5) and the flow resistance (18, 28).

6. Device (1) according to Claim 5, **characterized in that** the heating apparatus (16) is configured as a low-pressure boiler, **in that** a controllable outlet valve (17) is disposed between the heating apparatus (16) and the outlet unit (8), and **in that** the outlet valve (17) is controllably connected with a control unit in such a manner that the air-enriched liquid in the heating apparatus (16) has a pressure of 0.5 bar to 4 bar, in particular a pressure of 1 bar to 3 bar.

7. Device (1) according to one of Claims 1 to 6, **characterized in that** the resistance elements (20c) are configured so as to be thread-like and are interconnected so as to form an elastically deformable wool.

8. Device (1) according to one of Claims 1 to 7, **characterized in that** the resistance elements (20a, 20b, 20c) are composed of a natural material, in particular of coir and/or hairs.

9. Device (1) according to one of Claims 1 to 8, **characterized in that** the resistance elements (20b) are formed by shavings or cuttings of shavings which, in the direction of longitudinal extent, have a substantially constant cross section.

10. Device (1) according to one of Claims 1 to 7, 9, **characterized in that** the resistance elements (20a, 20b, 20c) are composed of plastic, in particular of Teflon, polyoxymethylene or polyamide.

11. Device (1) according to one of Claims 1 to 10, **characterized in that** the resistance elements (20a, 20b, 20c) are enclosed between perforated discs (21, 24) or sieves, which are disposed behind one another in the line and which, with their planes of extent, are transversely aligned to the longitudinal extent of the line (7) and, under compression of the resistance elements (20a, 20b, 20c) are displaceable towards one another from a resting position, and **in that** the perforated disc (24) which is more remote from the air-enrichment unit or the sieve which is more remote from the air-enrichment unit is configured as a counter bearing against which the resistance elements (20a, 20b, 20c), when impinged with pressure by the aerated liquid, are positionable.

12. Device (1) according to one of Claims 1 to 11, **characterized in that** the opening cross section of the inlet-side perforated disc (24) or of the inlet-side sieve is smaller than the opening cross section of the outlet-side perforated disc (21) or of the outlet-side sieve.

13. Device (1) according to one of Claims 1 to 12, **characterized in that** the resistance elements (20a, 20b, 20c) and, if applicable, the perforated discs (21, 24) or sieves are disposed in the inner cavity of a cartridge (19) which is releasably connectable to the line and/or the outlet unit.

## Revendications

1. Dispositif (1) pour faire mousser un liquide, comprenant une unité d'enrichissement en air au moyen de laquelle de l'air peut être introduit dans le liquide, une unité de déchargement (8) reliée avec l'unité d'enrichissement en air par une conduite (7), et une pompe (5) pour transporter le liquide dans lequel de l'air a été introduit de l'unité d'enrichissement en air vers l'unité de déchargement (8), **caractérisé en ce qu'**au moins une résistance à l'écoulement (18, 28) est agencée dans la conduite (7), qui comprend une pluralité d'éléments de résistance (20a, 20b, 20c) adjacents les uns aux autres, déplaçables les uns par rapport aux autres, en un matériau élastique, entre lesquels des passages pour le liquide dans lequel de l'air a été introduit sont formés, et **en ce que** la résistance à l'écoulement (18, 28) peut être positionnée contre une butée de manière à ce que les éléments de résistance (20a, 20b, 20c) soient comprimés lors de l'application d'une pression avec le liquide dans lequel de l'air a été introduit.

2. Dispositif (1) selon la revendication 1, **caractérisé en ce que** la résistance à l'écoulement (28) est agencée dans l'unité de déchargement (8).

3. Dispositif (1) selon la revendication 1 ou 2, **caractérisé en ce que** les éléments de résistance (20a) sont des grains de granulat.

4. Dispositif (1) selon l'une quelconque des revendications 1 à 3, **caractérisé en ce que** la pompe (5) est une pompe volumétrique, et **en ce que** la résistance à l'écoulement (18) est agencée entre la pompe (5) et l'unité de sortie (8), notamment entre la pompe (5) et un appareil chauffant (16) connecté dans la conduite pour le chauffage du liquide dans lequel de l'air a été introduit.

5. Dispositif (1) selon l'une quelconque des revendications 1 à 4, **caractérisé en ce qu'**un clapet de non-retour (6) est agencé dans la conduite (7) entre la pompe (5) et la résistance à l'écoulement (18, 28), qui est perméable à un courant s'écoulant de l'unité d'enrichissement en air vers l'unité de sortie.

6. Dispositif (1) selon la revendication 5, **caractérisé en ce que** l'appareil chauffant (16) est configuré sous la forme d'un bouilleur à basse pression, **en ce qu'**un clapet de déchargement commandable (17) est agencé entre l'appareil chauffant (16) et l'unité de déchargement (8), et **en ce que** le clapet de déchargement (17) est en connexion de commande avec une unité de commande de manière à ce que le liquide enrichi en air présente dans l'appareil chauffant (16) une pression de 0,5 bar à 4 bar, notamment une pression de 1 bar à 3 bar.

7. Dispositif (1) selon l'une quelconque des revendications 1 à 6, **caractérisé en ce que** les éléments de résistance (20c) sont configurés sous la forme de fils et sont reliés les uns avec les autres en une laine déformable élastiquement.

8. Dispositif (1) selon l'une quelconque des revendications 1 à 7, **caractérisé en ce que** les éléments de résistance (20a, 20b, 20c) sont constitués d'un matériau naturel, notamment de noix de coco et/ou de poils.

9. Dispositif (1) selon l'une quelconque des revendications 1 à 8, **caractérisé en ce que** les éléments de résistance (20b) sont formés par des copeaux ou des parties de copeaux, qui présentent une section essentiellement constante dans la direction d'extension longitudinale.

10. Dispositif (1) selon l'une quelconque des revendications 1 à 7, 9 **caractérisé en ce que** les éléments de résistance (20a, 20b, 20c) sont constitués de plastique, notamment de Téflon, de polyoxyméthylène ou de polyamide.

11. Dispositif (1) selon l'une quelconque des revendications 1 à 10, **caractérisé en ce que** les éléments de résistance (20a, 20b, 20c) sont inclus entre des disques perforés (21, 24) ou des tamis agencés les uns après les autres dans la conduite, dont le plan est orienté perpendiculairement à l'extension longitudinale de la conduite (7) et qui peuvent être déplacés à partir d'une position de repos par compression des éléments de résistance (20a, 20b, 20c) les uns sur les autres, et **en ce que** le disque perforé (24) le plus éloigné de l'unité d'enrichissement en air ou le tamis le plus éloigné de l'unité d'enrichissement en air est configuré sous la forme d'une butée, contre laquelle les éléments de résistance (20a, 20b, 20c) peuvent être positionnés lors de l'application d'une pression avec le liquide dans lequel de l'air a été introduit.

12. Dispositif (1) selon l'une quelconque des revendications 1 à 11, **caractérisé en ce que** la section de passage du disque perforé du côté de l'entrée (24) ou du tamis du côté de l'entrée est plus petite que la section de passage du disque perforé du côté de la sortie (21) ou du tamis du côté de la sortie.

13. Dispositif (1) selon l'une quelconque des revendications 1 à 12, **caractérisé en ce que** les éléments de résistance (20a, 20b, 20c) et éventuellement les disques perforés (21, 24) ou les tamis sont agencés dans la cavité intérieure d'une cartouche (19) pouvant être reliée de manière amovible avec la conduite et/ou l'unité de déchargement.
